# EUROPEAN PATENT APPLICATION

(11) **EP 3 216 636 A1**
(43) Date of publication of application: **13.09.2017**
(21) Application number: 17159931.9
(22) Date of filing: 08.03.2017
(51) Int. Cl.: B60H 1/00, B60P 3/20, B60H 1/32, F25D 3/10, F25D 29/00

(54) **REFRIGERATION SYSTEM AND METHOD**

(30) Priority: 08.03.2016 GB 201604012
(71) Applicant: G.A.H. (Refrigeration) Limited, Ipswich, Suffolk IP3 9SI (GB)
(72) Inventor: Reader, John, Woodbridge, Suffolk IP12 2TW (GB)
(74) Representative: Williams Powell

(57) **Abstract**

A refrigeration system (10) and method are disclosed. The refrigeration system (10) includes a refrigerant source (20), a controller (30) and a heat exchanger (40). The refrigerant source (20) is arranged to receive a feed of refrigerant and is arranged to vent the refrigerant under control of the controller (30) via the heat exchanger (40) and out of the refrigeration system (10).

## Description

### Field of the Invention

The present invention relates to a refrigeration system and method and in particular one that is particularly suitable for use in vehicular deliveries.

### Background to the Invention

Deliveries of items needing refrigeration is a common activity. Lorries and vans involved in such deliveries typically include a refrigerated compartment that is cooled by a refrigeration unit mounted on the roof, behind the cab or in some other suitable place. A refrigeration unit typically includes a compressor that drives coolant around a closed circuit.

Because of the energy requirements for powering a refrigeration unit are high, it is common that the refrigeration system is powered by the vehicle's engine or has a dedicated engine to power it.

### Statement of Invention

According to an aspect of the present invention, there is provided a refrigeration system including a refrigerant source, a controller and a heat exchanger, wherein the refrigerant source is arranged to receive a feed of refrigerant and is arranged to vent the refrigerant under control of the controller via the heat exchanger and out of the refrigeration system.

The refrigerant feed preferably comprises a pressurised vessel. The pressurised vessel may comprises a bottle or canister. Preferably, the pressurised vessel is replaceable. Preferably, the pressurised vessel is a user replaceable consumable.

The refrigerant feed may comprise a plurality of pressurised vessels that may be operable automatically or manually, individually, collectively, selectively and/or under some programmed or controlled sequence.

In a preferred embodiment, each of the plurality of pressurised vessels is controllable separately by the controller and is replaceable independently of the others of the plurality of pressurised vessels.

Preferably, the refrigerant comprises carbon dioxide stored under pressure as a liquid.

The controller may include a first control operable to trigger operation of the refrigeration system. The controller may include a second control that controls dispensing and venting of the refrigerant over time. The second control may control rate of escape of the refrigerant in dependence on a desired temperature.

The refrigeration system may further comprise a temperature sensor positioned in an area to be refrigerated by the refrigeration system or around the heat exchanger, the temperature sensor being arranged to communicate with the second control to regulate the rate of escape in dependence on temperature measured by the temperature sensor.

The refrigeration system is preferably a backup installable in parallel to a primary refrigeration system and is triggerable upon failure of the primary refrigeration system. This may be a manual or automatic action or some combination of the two.

According to another aspect of the present invention, there is provided a refrigeration method comprising:
receiving a feed of refrigerant from a user-replaceable pressurised vessel;
venting the refrigerant under control of a controller via a heat exchanger and out of the refrigeration system.

In preferred embodiments, the refrigeration system is a "total loss" refrigeration system in which the refrigerant is lost to the atmosphere as it is vented. Preferably, there is no recovery circuit and the refrigerant is only used once (although clearly it could be recaptured from the atmosphere).

Preferably, the refrigerant feed comprises a pressurised vessel such as a bottle or canister. Preferably, the refrigerant comprises carbon dioxide stored under pressure as a liquid. It will be appreciated that other refrigerants with similar physical properties may be used. Components of the refrigeration system are preferably selected so as to stand high pressures encountered due to use of carbon dioxide as a coolant.

The controller may include a first control that is operable to trigger operation of the refrigeration system and optionally a second control that controls dispensing and venting of the refrigerant over time. For example, the first control may be a valve, handle or push button that opens a valve and allows the liquified carbon dioxide to escape from the pressurised vessel and as it does so boil and impart cooling to the environment via the heat exchanger.

The second control preferably controls rate of escape of the refrigerant in dependence on a desired temperature. For example, a thermostat or other temperature probe may be positioned in the refrigerated area or around the heat exchanger and used to regulate rate of escape (bleed rate) of the refrigerant. Optionally, multiple temperatures may be monitored and the bleed rate controlled to make optimal use of the refrigerant.

In one embodiment, the refrigeration system may provide approximately 2 hours of refrigeration so as to be able to act as an emergency refrigeration source. Preferably, the refrigeration system is installed as a backup in parallel to a primary, for example battery or vehicular powered, refrigeration system. In the event of failure of the primary refrigeration system or its power source, the backup refrigeration system can be triggered via the first control in the event of failure of the primary system being detected or reported. For example, the first control may be installed in the vehicle cab alongside warning lights or other monitoring systems for the primary system.

Preferably, the vessel is user-replaceable. For example, the pressurised bottles may be sold as consumables or as refillable and returnable sources of the refrigerant. For example, a number of bottles may be stored in a vehicle, cab etc and swapped out as needed. The bottles can be kept long-term with the system held in reserve in case the primary system fails. In the case of refrigeration applications where continued refrigeration is highly important (for example if something being transported may spoil), the emergency refrigeration provided may be sufficient to get the primary system repaired, get the vehicle to somewhere with a suitable refrigeration unit etc. The backup refrigeration system may provide sufficient refrigeration (particularly if there are multiple bottles available to be swapped out) to continue and complete the journey.

In a typical vapour compression refrigeration cycle the system is configured such that the refrigerant boils at a temperature a little lower than the temperature to be maintained and the heat exchanger preferably functions such that the last drops of refrigerant boil off just before they leave the heat exchanger. This maximises the energy absorbed from the change of state of the refrigerant i.e. its latent heat of evaporation.

As the boiling point of the refrigerant is typically much lower than the temperature to be maintained (because the CO2 will be discharging effectively to atmospheric pressure and the temperature at which a liquid boils is directly dependent on its pressure), the heat exchanger is preferably configured to not only take advantage of the latent heat of evaporation of the refrigerant liquid but also to utilise as much as possible the specific heat capacity of the gas as its temperature is brought back up as close as possible to the temperature to be maintained. This means that only a small part of the heat exchanger will be used to boil the refrigerant and the larger part being used to absorb heat directly through the change of temperature of the gas.

### Brief Description of the Drawings

Embodiments of the present invention will now be described by way of example only and with reference to the accompanying drawings, in which:
Figure 1 is a schematic diagram of a refrigeration system according to an embodiment; and,
Figure 2 is a schematic diagram of the refrigeration system of Figure 1 illustrating selected further optional features according to another embodiment.

### Detailed Description

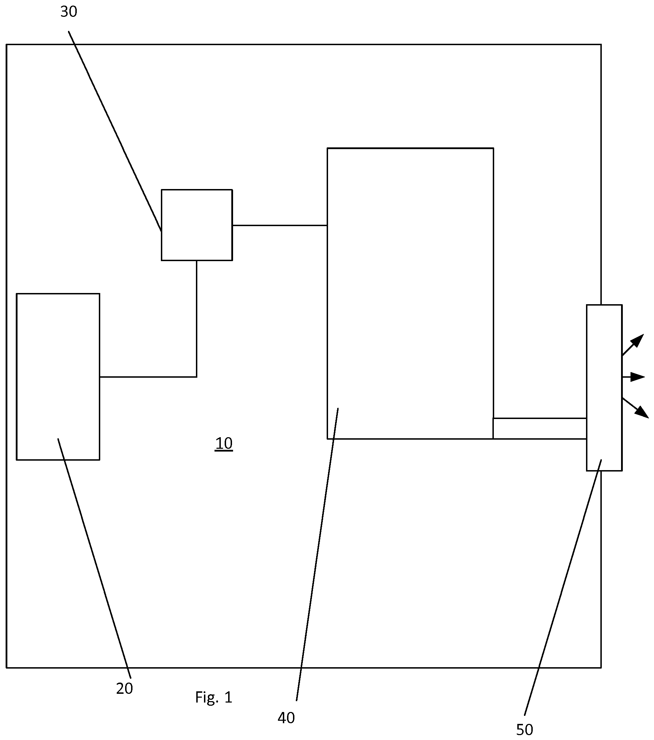

Figure 1 is a schematic diagram of a refrigeration system according to an embodiment.

The refrigeration system 10 includes a refrigerant source 20, a controller 30 and a heat exchanger 40. The refrigerant source 20 is arranged to receive a feed of refrigerant and is arranged to vent the refrigerant under control of the controller 30 via the heat exchanger 40 and out of the refrigeration system via an exhaust or vent 50.

In this embodiment, the refrigerant source 20 is a user replaceable bottle of pressurised carbon dioxide. The refrigeration system is a "total loss" refrigeration system in which the refrigerant is lost to the atmosphere as it is vented.

When the refrigeration is needed (for example it is expected that the refrigeration system would be installed as a backup in parallel to a primary refrigeration system for situations where the primary refrigeration system fails or is degraded), it is triggered via the controller 30. This may be a manual or automatic action or some combination of the two. For example, there may be a manual lever, valve, handle or button to open a valve to the pressurised.

Upon opening of the vessel 20, the pressurised (preferably liquefied) carbon dioxide escapes from the pressurised vessel 20 due to pressure differential and as it does so it boils and imparts cooling to the environment via the heat exchanger 40.

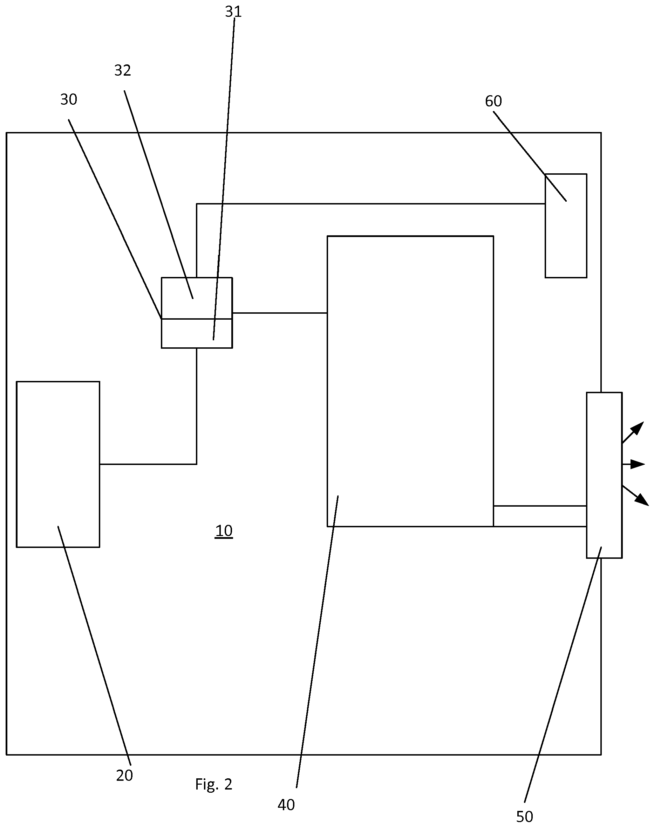

Figure 2 is a schematic diagram of the refrigeration system of Figure 1 illustrating selected further optional features according to another embodiment.

In this embodiment, the refrigeration system 10 includes a temperature sensor 60 and the controller 30 includes first 31 and second 32 controls. The first control 31 operates as described above in connection with Figure 1 to control operation of the refrigeration system 10 by controlling escape of the refrigerant into the refrigeration system 10. The second control 32 controls rate of escape of the refrigerant. In this embodiment, one factor taken into account by the second control 32 is a desired temperature. The temperature sensor 60 may be a thermostat or other temperature probe which is positioned in the refrigerated area or around the heat exchanger 40. The temperature sensor 60 is arranged to communicate with the second control (for example by a piped wired or wireless link) to provide temperature measurements or some other measure of deviation from the desired temperature. The second control 32 uses the received data to regulate rate of escape (bleed rate) of the refrigerant. Optionally, multiple temperatures may be monitored and the bleed rate controlled to make optimal use of the refrigerant. Optionally, the second control 32 may also take into account other factors such as operational tolerances of the refrigeration system 10 and environmental limits on venting refrigerant.

The second control 32 may operate as a feedback or feed forward controller, may include fuzzy logic control or utilize other control system techniques to regulate refrigerant flow against desired goals.

In one embodiment, the refrigerant source 20 may be a bank of pressurised bottles that can be drawn upon by the controller 30 to provide refrigerant as needed. For example, their respective refrigerant could be vented sequentially or under some circumstances they may be drawn upon in parallel or all together. For example, as one bottle empties, another may be drawn upon to provide overlap and consistency of supply. Similarly, the controller may be configurable with a desired run-time (for example the driver may know how long to destination or until a repair team arrives) and in such circumstances the controller may tune bleed rate to optimally provide refrigerant over that period. It may be that a display of estimated run-time is provided that is adjusted by the controller as the refrigeration system operates. An associated "desired temperature" control may also be provided such that a user can see the estimated run time based on desired temperature. This may also take into account ambient temperature sensed by the temperature sensor or other sensor(s), capacity of the refrigerated space, estimated cooling capability of the refrigerant (which may be updated once the system actually operates) etc.

The content of the priority application GB 1604012.3 and of the abstract accompanying this application are herein incorporated by reference.

## Claims

1. A refrigeration system including a refrigerant source, a controller and a heat exchanger, **characterised in that** the refrigerant source is arranged to receive a feed of refrigerant and is arranged to vent the refrigerant under control of the controller via the heat exchanger and out of the refrigeration system.

2. The refrigeration system as claimed in claim 1, wherein the refrigerant feed comprises a pressurised vessel.

3. The refrigeration system as claimed in claim 2, wherein the pressurised vessel comprises a bottle or canister.

4. The refrigeration system as claimed in claim 2 or 3, wherein the pressurised vessel is replaceable.

5. The refrigeration system as claimed in claim 4, wherein the pressurised vessel is a user replaceable consumable.

6. The refrigeration system as claimed in any of claims 2 to 5, wherein the refrigerant feed comprises a plurality of pressurised vessels.

7. The refrigeration system as claimed in claim 6, wherein each of the plurality of pressurised vessels is controllable separately by the controller and is replaceable independently of the others of the plurality of pressurised vessels.

8. The refrigeration system as claimed in any of claims 2 to 7 wherein the refrigerant comprises carbon dioxide stored under pressure as a liquid.

9. The refrigeration system as claimed in any preceding claim, wherein the controller includes a first control operable to trigger operation of the refrigeration system.

10. The refrigeration system as claimed in claim 9, wherein the controller includes a second control that controls dispensing and venting of the refrigerant over time.

11. The refrigeration system as claimed in claim 10, wherein the second control controls rate of escape of the refrigerant in dependence on a desired temperature.

12. The refrigeration system as claimed in claim 11, further comprising temperature sensor positioned in an area to be refrigerated by the refrigeration system or around the heat exchanger, the temperature sensor being arranged to communicate with the second control to regulate the rate of escape in dependence on temperature measured by the temperature sensor.

13. The refrigeration system as claimed in any preceding claim, wherein the refrigeration system is a backup installable in parallel to a primary refrigeration system and is triggerable upon failure of the primary refrigeration system.

14. A refrigeration method comprising:
receiving a feed of refrigerant from a user-replaceable pressurised vessel;
venting the refrigerant under control of a controller via a heat exchanger and out of the refrigeration system.
